# EUROPEAN PATENT APPLICATION

(11) **EP 3 971 139 A1**
(43) Date of publication of application: **23.03.2022**
(21) Application number: 20197533.1
(22) Date of filing: 22.09.2020
(51) Int. Cl.: C01F 7/04, H01M 4/485, H01M 4/62

(54) **SYNTHESIS OF NANOSTRUCTURED ALPHA LITHIUM ALUMINATE**

(71) Applicant: Evonik Operations GmbH, 45128 Essen (DE)
(72) Inventor: Vieth, Sebastian, 36167 Nüsttal (DE); Müller, Sven, 53125 Bonn (DE); Panz, Christian, Dr., 50389 Wesseling-Berzdorf (DE); Takata, Ryo, 63452 Hanau (DE); Schmidt, Franz, Dr., 60386 Frankfurt (DE)
(74) Representative: Evonik Patent Association

(57) **Abstract**

The invention relates to a process for producing alpha lithium aluminate comprising the following steps: 1) preparing an aqueous dispersion comprising a fumed alumina, a lithium oxide precursor compound soluble in water and an alkali metal and/or an ammonium carbonate; 2) Spray drying of the dispersion prepared in step 1) to obtain a dried powder; 3) Calcining the dried powder obtained in step 2) at a temperature of from 450°C to 750°C. Lithium aluminate obtainable by this process can be used in lithium ion batteries.

## Description

### Field of the invention

The invention relates to a process for producing alpha lithium aluminate from fumed alumina, lithium aluminate obtainable by this process and the use thereof in lithium ion batteries.

### Prior art

Because of its outstanding chemical and thermal stability, lithium aluminate (LiAlO₂) can be applied as a potential candidate for both tritium breeding material in fusion reactors and the matrix of molten carbonate fuel cells.

It can also be used in lithium ion batteries (LIBs) as a ceramic filler for polymer electrolytes or as a component of composite solid electrolyte to increase ionic conductivities, as well as to improve the morphological or mechanical properties, and the compatibility with lithium metal electrode. LiAlO₂ can also be applied for coating the electrodes to improve the electrochemical performance of LIBs. The lithium aluminate has three main allotropic forms: α-(hexagonal), β-(monoclinic), and γ-(tetragonal)-LiAlO₂. It has been shown, that α-LiAlO₂ can be used preferentially as the coating layer at electrodes resulting in better electrochemical performances. α-LiAlO₂ exhibits the α-NaFeO₂ hexagonal layered structure, which may lead to a better chemical and physical compatibility with layered structure of cathodes, e.g. those made of LiCoO₂ with the same space group.

Several methods for the syntheses of lithium aluminates and related compounds with various physico-chemical properties have been reported.

US 2006/0003230 A1 discloses pyrogenic oxides comprising atoms of groups 3A, 4A, 3B or 4B, of the periodic table of elements, particularly silicon, aluminium or zirconium, and lithium atoms attached to those former atoms via oxygen bridges. According to US 2006/0003230 A1, such lithium-doped pyrogenic oxides can be used in separators for electrochemical cells of lithium ion batteries. US 2006/0003230 A1 specifically discloses preparation of a lithium-doped fumed alumina by treatment of an ethanolic dispersion of "aluminium oxide C" manufactured by Degussa with lithium ethoxide followed by evaporation of the solvents and thermal treatment of the residue at 350 °C. The thus prepared lithium-doped alumina is chemically different from the lithium aluminate.

CN104370298 A discloses preparation method of a nano-sized lithium aluminate powder with an unspecified crystal structure, including preparation of anodic aluminium oxide template by anodic oxidation and hydrothermal reaction of this aluminium oxide template with lithium nitrate and lithium carbonate.

In Fuel Cells 2009, vol. 09 (5), pp. 605-612, preparation of α-/β-LiAlO₂ using three different methods is described. In the first method, Al(OH)₃ and LiOH are used as precursors and glycerin or triethylene glycol as catalysts for manufacturing of α-/β-LiAlO₂ particles. Heat-treatment of the obtained α-/β-LiAlO₂ particles in a CO₂ gas flow leads to a partial conversion of β-LiAlO₂ into α-LiAlO₂. In the second method, molten alkali carbonates were used as catalysts to prepare α-LiAlO₂ as a major phase. However, this method required an additional washing process step. In the third method, pure α-LiAlO₂ phase was obtained by heat-treatment of Li₂CO₃ and Al(OH)₃ at 600-800 °C. The mean particle size of such α-LiAlO₂ particles was in the range 604 nm-11.85 µm and the specific surface area 3.22-11.4 m²/g.

Solid State Ionics 2016, vol. 286, pp. 122-134 discloses preparation of a pure α-LiAlO₂ by a solid-state reaction at 250-750 °C of a ball-milled mixture of Al(OH)₃ and Li₂CO₃.

Mat. Res. Bull. 1979, vol. 14, pp. 1357-1368 relates to synthesis of lithium aluminate for application in molten carbonate fuel cells. Heat treatment of various aluminium sources such as γ-Al₂O₃, α-Al₂O₃, γ-AlOOH, Al(OH)₃ with Li₂CO₃, LiOH or Li₂CO₃/K₂CO₃ at 625-975 K was tested to optimize the synthesis of γ-LiAlO₂ with a high surface area. In one of the specific embodiments, a pyrogenically produced γ-Al₂O₃ Alu C was mixed with Li₂CO₃ and K₂CO₃, and the mixture was calcined at 600 °C to provide alpha-LiAlO₂ with a BET of 80 m²/g und an average particle size d₅₀ of 0.9 µm. Rather broad particle size distribution of such LiAlO₂ particles shows two major peaks, the first at < 1 µm and the second at about 10 µm. Additional purification steps are required to eliminate the components including potassium salts from the obtained lithium aluminate.

Synthesis of pure alpha-lithium aluminate with a high surface area, small particle size, narrow particle size distribution and low material density has not been reported in the prior art so far.

However, this particular set of properties is desirable if a lithium aluminate is intended to be used as an additive for lithium ion batteries, which can be well distributed in the core material or on its surface, particularly on the surface of active cathode materials for lithium ion batteries.

### Problem and solution

The problem addressed by the present invention is that of providing an improved method for industrial manufacturing of pure crystalline lithium aluminate usable in lithium ion batteries, especially as coating or doping material for electrodes of lithium ion batteries, particularly cathodes, and as additives to electrolytes of lithium ion batteries.

Specifically, this method should provide lithium aluminate particles in alpha crystallographic phase, with high BET surface area, low tamped density, with relatively small particle size and narrow particle size distribution.

In the course of thorough experimentation, it was surprisingly found that lithium aluminate with the desired particle properties can be efficiently prepared using an aqueous dispersion of a fumed alumina and specific other precursors by means of spray drying and subsequent calcination of the obtained product in the particular temperature range.

### The process for producing lithium aluminate

The invention provides a process for producing alpha lithium aluminate, comprising the following steps:
1) preparing an aqueous dispersion comprising a fumed alumina, a lithium oxide precursor compound soluble in water and an alkali metal and/or an ammonium carbonate;
2) Spray drying of the dispersion prepared in step 1) to obtain a dried powder;
3) Calcining the dried powder obtained in step 2) at a temperature of from 450°C to 750°C.

The term "alpha lithium aluminate" refers to the α-(hexagonal) allotropic form of the lithium aluminate. The term "allotropic form" is used alternatively to the term "crystallographic phase" in the invention. The crystallographic structure of such a crystallographic phase (allotropic form) can be determined by the XRD analysis.

The term "fumed alumina" rerefers in the context of the present invention to pyrogenically produced aluminium oxide. Such fumed aluminas can be prepared by means of flame hydrolysis or flame oxidation. This involves oxidizing or hydrolysing of hydrolysable or oxidizable starting materials, generally in a hydrogen/oxygen flame. Starting materials typically used for pyrogenic methods include organic or inorganic substances. Aluminium chloride is particularly suitable as a precursor. The hydrophilic alumina thus obtained is amorphous. Fumed aluminas are generally in aggregated form. "Aggregated" is understood to mean that what are called primary particles, which are formed at first in the genesis, become firmly bonded to one another later in the reaction to form a three-dimensional network. The primary particles are substantially free of pores and have free hydroxyl groups on their surface. These initially formed highly disperse approximately spherical primary particles, coalesce in the further course of the reaction to form aggregates. The aggregates can then accumulate into agglomerates. In contrast to the agglomerates, which as a rule can be separated into the aggregates relatively easily by introduction of energy, the aggregates are broken down further, if at all, only by intensive introduction of energy.

The term "soluble in water" refers in the context of the present invention to the solubility of the lithium oxide precursor compound of at least 0.1 g, preferably at least 1.0 g of the compound in 100 g water at 20 °C.

The lithium oxide precursor compound soluble in water is preferably selected from the group consisting of lithium hydroxide, lithium oxide, lithium carbonate, lithium hydrogencarbonate, lithium oxalate, lithium acetate, lithium formate, lithium nitrate, lithium chloride, lithium bromide, lithium sulfate, lithium perchlorate, and the mixtures thereof.

The alkali metal carbonate is preferably selected from the group consisting of lithium carbonate, lithium hydrogencarbonate, sodium carbonate, sodium hydrogencarbonate, potassium carbonate, potassium hydrogencarbonate, and the mixtures thereof.

The ammonium carbonate can be a compound with the chemical formula (NH₄)₂CO₃ (ammonium carbonate) or NH₄HCO₃ (ammonium hydrogencarbonate).

Most preferably, both the lithium oxide precursor compound and the alkali metal carbonate are the same compound lithium carbonate (Li₂CO₃).

The fumed alumina preferably has a BET surface area of 20 m²/g to 250 m²/g, more preferably 50 m²/g to 200 m²/g, more preferably 70 m²/g to 150 m²/g. The BET surface area can be determined according to DIN 9277:2014 by nitrogen adsorption according to Brunauer-Emmett-Teller procedure.

The aqueous dispersion used in step 1) of the inventive process comprises a fumed alumina, a lithium oxide precursor compound soluble in water and an alkali metal and/or an ammonium carbonate. The content of the fumed alumina in the dispersion can be from 0.5% to 20% by weight, more preferably from 1% to 10% by weight, more preferably from 2% to 6% by weight.

The amount of the used lithium oxide precursor compound preferably corresponds to the stoichiometric formation of LiAlO₂, i.e. the molar ratio of the elements lithium to aluminium in the aqueous dispersion used in the step 1) of the process is about 1 to 1.

In step 2) of the process according to the invention, the dispersion prepared in step 1) is subjected to spray drying to evaporate water and other volatiles and obtain dried powder consisting of the particles comprising lithium and aluminium. Spray drying may be carried out in any suitable spray drier.

The dried powder obtained in step 2) of the inventive process preferably delivers particles with numerical mean particle size d₅₀ of not more than 20 µm, preferably 1 µm - 15 µm, more preferably 2 µm - 10 µm. The numerical mean particle size dso of the particles can be determined by static light scattering (SLS) in the aqueous dispersion.

Such spray-dried particles preferably have a narrow particle size distribution. The span of particle size distribution (d₉₀-d₁₀)/d₅₀ of these particles is preferably not more than 2.5, more preferably 0.8 - 2.0, more preferably 0.9 - 1.5.

Step 2) of the inventive process is preferably carried out using an outlet air temperature of the spray drier of 50°C to 200 °C, more preferably 80-150 °C, more preferably 90-140 °C.

In step 3) of the inventive process, the dried powder obtained in step 2) of the process is calcined at a temperature of from 450°C to 750°C, preferably 500°C to 700°C, more preferably 550°C to 650°C, especially preferably 580°C to 620°C, to obtain alpha lithium aluminate.

The duration of step 3) can be, depending on the calcination temperature applied, from 1h to 24h, preferably from 2h to 20h, more preferably from 3h to 10h, more preferably from 4h to 8h.

Calcination in step 3) may be performed discontinuously, e.g. in a muffle furnace or using another suitable device, or continuously, e.g. in a rotary kiln or any other suitable device.

The obtained lithium aluminate can further be milled, preferably using a ball mill, to reduce the average particle size of the lithium aluminate.

The ball milling is preferably carried out by ZrO₂ balls, e.g. with a diameter of about 0.5 mm in an appropriate solvent, such as ethanol or isopropanol.

The inventive process allows preparation of lithium aluminate in alpha crystallographic form, with high surface area, small particle size and narrow particle size distribution.

### Lithium aluminate

The invention further provides lithium aluminate predominantly in alpha crystallographic phase, as determined by XRD analysis with:
- a BET surface area of at least 40 m²/g, preferably 50 m²/g - 100 m²/g, more preferably 55 m²/g - 80 m²/g;
- numerical mean particle size dso of not more than 20 µm, preferably 1 µm - 15 µm, more preferably 2 µm - 10 µm;
- span of particle size distribution (d₉₀-d₁₀)/d₅₀ of not more than 2.5, preferably 0.8 - 2.0, more preferably 0.9 - 1.5.

The inventive lithium aluminate can be obtained by the above described process of the invention.

In the context of the present invention "predominantly in alpha crystallographic phase" means that the lithium aluminate is at least 70% in the alpha phase, as determined by XRD analysis.

The inventive lithium aluminate preferably comprises at least 80%, more preferably at least 90%, more preferably at least 95% of alpha LiAlO₂ phase, as determined by XRD analysis.

The inventive process allows preparation of a pure lithium aluminate, i.e. a product with a content of at least 90% by weight, more preferably at least 95% by weight, more preferably at least 98% by weight of lithium aluminate and only a small weigh ratio of other components.

The BET surface area can be determined according to DIN 9277:2014 by nitrogen adsorption according to Brunauer-Emmett-Teller procedure.

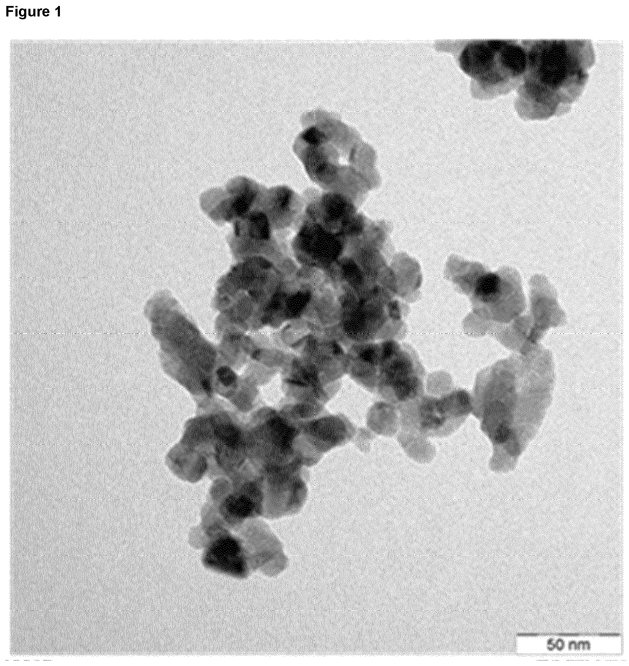

The inventive lithium aluminate is typically in the form of aggregated primary particles and shows the structure similar to those of pyrogenically produced metal oxides. Figure 1 shows a TEM image of such aggregated primary particles of lithium aluminate.

The aggregates can be accumulated into agglomerates. In contrast to the agglomerates, which as a rule can be separated into the aggregates relatively easily by introduction of energy, the aggregates are broken down further, if at all, only by intensive introduction of energy.

The numerical mean particle size dso of the inventive lithium aluminate can be determined by static light scattering (SLS) in the aqueous dispersion according to ISO 13320 after treating the aqueous dispersion with ultrasound for 5 minutes.

The numerical mean diameter of primary particles of the lithium aluminate is typically 1 nm - 100 nm, preferably 3 - 70 nm, more preferably 5 - 50 nm, as determined by transition electron microscopy (TEM). This numerical mean diameter can be determined by calculating the average size of at least 500 particles analysed by TEM.

The agglomerates and partly the aggregates of the inventive lithium aluminate can be destroyed e.g. by grinding or ultrasonic treatment of the particles to result in particles with a smaller particle size and a narrower particle size distribution.

The lithium aluminate according to the invention preferably has a tamped density of 20 g/L - 800 g/L, more preferably 50g/L - 500 g/L, even more preferably 100 g/L - 400 g/L, still more preferably 200 g/L - 300 g/L.

Tamped density of a pulverulent or coarse-grain granular material can be determined according to DIN ISO 787-11:1995 "General methods of test for pigments and extenders -- Part 11: Determination of tamped volume and apparent density after tamping". This involves measuring the apparent density of a bed after agitation and tamping.

### Use of the lithium aluminate in lithium ion batteries

The invention further provides use of the inventive lithium aluminate or the lithium aluminate prepared by the inventive process in a lithium ion battery, especially as a component of a solid-state electrolyte, as an additive in liquid, or gel electrolyte or as a constituent, such as coating or doping, of an electrode of a lithium ion battery.

The invention further provides lithium ion battery comprising the lithium aluminate according to the invention or the lithium aluminate obtainable by the inventive process.

The lithium ion battery of the invention can contain an active positive electrode (cathode), an anode, a separator and an electrolyte containing a compound comprising lithium.

Another object of the invention is electrode for a lithium ion battery comprising the lithium aluminate according to the invention or the lithium aluminate obtainable by the inventive process.

The lithium aluminate may be used as a dopant or coating for the electrode of the lithium ion battery.

The positive electrode (cathode) of the lithium ion battery usually includes a current collector and an active cathode material layer formed on the current collector.

The current collector may be an aluminium foil, copper foil, a nickel foil, a stainless-steel foil, a titanium foil, a polymer substrate coated with a conductive metal, or a combination thereof.

The active positive electrode materials may include materials capable of reversible intercalating/deintercalating lithium ions and are well known in the art. Such active positive electrode materials may include transition metal oxides, such as mixed oxides comprising Ni, Co, Mn, V or other transition metals and optionally lithium. The mixed lithium transition metal oxides used with preference as active positive electrode materials are selected from the group consisting of lithium-cobalt oxide, lithium-manganese oxide, lithium-nickel-cobalt oxides, lithium-nickel-manganese-cobalt oxides, lithium-nickel-cobalt-aluminium oxides, lithium-nickel-manganese oxides, or a mixtures thereof.

The anode of the lithium ion battery may comprise any suitable material, commonly used in the secondary lithium ion batteries, capable of reversible intercalating/deintercalating lithium ions. Typical examples thereof are carbonaceous materials including crystalline carbon such as natural or artificial graphite in the form of plate-like, flake, spherical or fibrous type graphite; amorphous carbon, such as soft carbon, hard carbon, mesophase pitch carbide, fired coke and the like, or mixtures thereof. In addition, lithium metal or conversion materials (e.g. Si or Sn) can be used as anode active materials.

The invention further provides electrolyte for a lithium ion battery comprising the lithium aluminate according to the invention or the lithium aluminate obtainable by the inventive process.

The electrolyte of the lithium ion battery can be in the liquid, gel or solid form.

The liquid electrolyte of the lithium ion battery may comprise any suitable organic solvent commonly used in the lithium ion batteries, such as anhydrous ethylene carbonate (EC), dimethyl carbonate (DMC), propylene carbonate, methylethyl carbonate, diethyl carbonate, gamma butyrolactone, dimethoxyethane, fluoroethylene carbonate, vinylethylene carbonate, or a mixture thereof.

The gel electrolytes include gelled polymers.

The solid electrolyte of the lithium ion battery may comprise oxides, e.g. lithium metal oxides, sulfides, phosphates, or solid polymers.

The liquid or polymer gel electrolyte of the lithium ion battery usually contains a lithium salt. Examples of such lithium salts include lithium hexafluorophosphate (LiPF₆), lithium bis 2-(trifluoromethylsulfonyl)imide (LiTFSI), lithium bis (fluorosulfonyl) imide (LiFSI), lithium perchlorate (LiClO₄), lithium tetrafluoroborate (LiBF₄), Li₂SiF₆, lithium triflate, LiN(SO₂CF₂CF₃)₂, lithium nitrate, lithium bis(oxalate)borate, lithium-cyclo-difluoromethane-1,1-bis(sulfonyl)imide, lithium-cyclo-hexafluoropropane-1,1-bis(sulfonyl)imide and mixtures thereof.

The lithium ion battery, especially the one with liquid or gel electrolyte can also comprise a separator, which prevents the direct contact between the two electrodes, which would lead to the internal short circuit.

The material of the separator may comprise a polyolefin resin, a fluorinated polyolefin resin, a polyester resin, a polyacrylonitrile resin, a cellulose resin, a non-woven fabric or a mixture thereof. Preferably, this material comprises a polyolefin resin such as a polyethylene or polypropylene based polymer, a fluorinated resin such as polyvinylidene fluoride polymer or polytetrafluoroethylene, a polyester resin such as polyethylene terephthalate and polybutylene terephthalate, a polyacrylonitrile resin, a cellulose resin, a non-woven fabric or a mixture thereof.

The lithium ion battery according to the invention may comprise a liquid electrolyte, a gel electrolyte or a solid electrolyte. The liquid mixture of the lithium salt and the organic solvent, which is not cured, polymerized or cross-linked, is referred to as "liquid electrolyte" in the context of the present invention. The gel or solid mixture comprising a cured, polymerized or cross-linked compound or their mixtures, optionally a solvent, and the lithium salt is referred to as a "gel electrolyte". Such gel electrolytes can be prepared by polymerization or cross-linking of a mixture, containing at least one reactive, i.e. polymerizable or cross-linkable, compound and a lithium salt.

A special type of lithium-ion battery is a lithium-polymer battery, wherein a polymer electrolyte is used instead of a liquid electrolyte. The electrolyte of a similar solid-state battery can also comprise other types of solid electrolytes, such as sulfidic, oxidic solid electrolytes, or mixtures thereof.

The battery of the invention can be a lithium metal battery, such as Li-air, lithium sulphur (Li-S), and other types of lithium metal batteries.

A Li-air battery typically contains a porous carbon cathode and an organic, glass-ceramic or polymer-ceramic type electrolyte.

A Li-sulfur (Li-S) battery usually contains an iron disulfide (FeS₂), an iron sulfide (FeS), a copper sulfide (CuS), a lead sulfide and a copper sulfide (PbS + CuS) cathode.

There are also many other known types of lithium metal batteries such as e.g. lithium-selenium (Li-Se), lithium-manganese dioxide (Li-MnO₂ or Li/Al-MnO₂), lithium-monofluoride (Li-(CF)ₓ), lithium-thionyl chloride (Li-SOCl₂), lithium -sulfuryl chloride (Li-SO₂Cl₂), lithium-sulfur dioxide (Li-SO₂), lithium-iodine (Li-I₂), lithium-silver chromate (Li-Ag₂CrO₄), lithium-vanadium pentoxide (Li-V₂O₅ or Li/Al-V₂O₅), lithium-copper chloride (Li-CuCl₂), lithium copper (II) oxide (Li-CuO), lithium-copper oxyphosphate (Li-Cu₄O(PO₄)₂) and other types.

### Brief Description of the Drawings

Figure 1 is a TEM image of lithium aluminate prepared as described in example 1.
Figure 2 is shows XRD patterns of lithium aluminate prepared as described in example 1

### Examples

### Comparative example 1

The mixture of a pyrogenic aluminium oxide AEROXIDE^{®} Alu C (manufactured by Evonik Industries AG) and a stochiometric amount of Li₂CO₃ to obtain LiAlO₂, were ball milled twice for 20 min. The obtained solid mixture was subjected to calcination at 600°C for 6h. Physico-chemical properties of the resulting product are shown in Table 1.

### Comparative example 2

60 Grams of a pyrogenic aluminium oxide AEROXIDE^{®} Alu C (manufactured by Evonik Industries AG) were dispersed in 900 g water. A solution of the stochiometric amount of LiOH to obtain LiAlO₂ in 500 g water was added. This dispersion was spray-dried on a laboratory spray drier (Büchi T0630) with an inlet air temperature of 230 °C and outlet air temperature of 130 °C. The obtained powder was subjected to calcination at 600°C for 6h. Physico-chemical properties of the resulting product are shown in Table 1.

### Example 1

60 Grams of a pyrogenic aluminium oxide AEROXIDE^{®} Alu C (manufactured by Evonik Industries AG) were dispersed in a solution of 84 g (NH₄)₂CO₃ in 900 g water. A solution of the stochiometric amount of LiOH to obtain LiAlO₂ in 500 g water was added. This dispersion was spray-dried on a laboratory spray drier (Büchi T0630) with an inlet air temperature of 230 °C and outlet air temperature of 130 °C. The obtained powder was subjected to calcination at 600°C for 6h. Physico-chemical properties of the resulting product are shown in Table 1. A TEM image of this sample is shown in Figure 1.

### Example 2

Solid carbon dioxide was gradually added to a solution of 20 g LiOH×H₂O in 611.5 g water to reach saturation with CO₂ at pH=7.3. 48 Grams of a pyrogenic aluminium oxide AEROXIDE^{®} Alu C (manufactured by Evonik Industries AG) was dispersed in this solution. A second solution of 19.5 g LiOH×H₂O in 225 g water was added. The resulting dispersion was spray-dried on a laboratory spray drier (Büchi T0630) with an inlet air temperature of 230 °C and outlet air temperature of 130 °C. The obtained powder was subjected to calcination at 600°C for 6h. Physico-chemical properties of the resulting product are shown in Table 1.

### Comparative example 3

The sample was prepared exactly as in example 1 except for the calcination temperature, which was 800°C instead of 600 °C in example 1. Physico-chemical properties of the resulting product are shown in Table 1.

### Comparative example 4

The sample was prepared exactly as in example 1 except for the calcination temperature, which was 400°C instead of 600 °C in example 1. Physico-chemical properties of the resulting product are shown in Table 1.

### Comparative example 5

The dispersion containing LiOH and Al₂O₃, prepared as in example 1, was sprayed with air via a spray nozzle producing an aerosol. This aerosol was introduced into a burner reactor with a H₂/air flame. The combustion parameters were chosen so, that the measured reaction temperature was 600 °C. The resulting hot product gas stream was cooled and filtered to obtain white particles. Physico-chemical properties of the resulting product are shown in Table 1.

### Comparative example 6

The sample was prepared exactly as in example 1 except for using a coarse µm-sized Al₂O₃ instead of AEROXIDE^{®} Alu C. Physico-chemical properties of the resulting product are shown in Table 1.

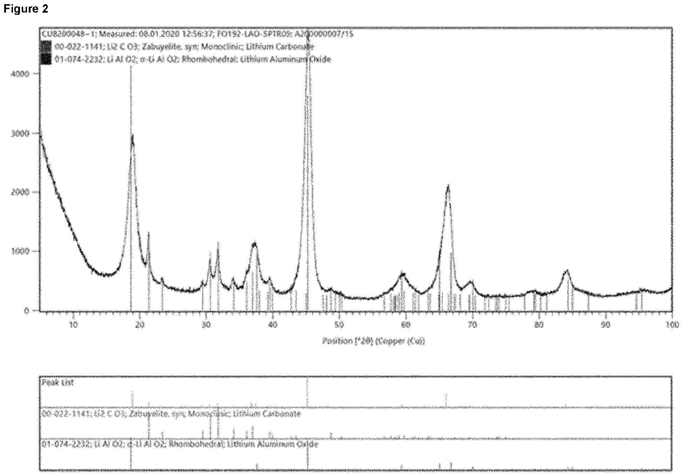

Table 1 shows that only in examples 1 and 2, the pure alpha phase of lithium aluminate was obtained. Figure 2 shows XRD analysis of the sample from example 1. The products of examples 1-2 are characterized by the highest BET surface area and the smallest particle size among all the examples. These products also show a very narrow particle size distribution (d₉₀-d₁₀)/d₅₀.

**Table 1 Physico-chemical properties of LiAlO₂ products.**

| **Example** | **BET [m²/g]** | **Particle size, d₉₀ [µm]** | **Particle size, dso [µm]** | **Particle size, d₁₀ [µm]** | **(d₉₀-d₁₀)/ d₅₀** | **The main crystallographic phase (XRD)** |
|---|---|---|---|---|---|---|
| Comparative Example 1 | 42 | 21.4 | 6.1 | 1.7 | 3.23 | α-LiAlO₂ / δ-Al₂O₃ |
| Comparative Example 2 | 40 | 9.9 | 6,1 | 3,7 | 1.01 | β-LiAlO₂/δ -Al₂O₃ |
| Example 1 | 61 | 8.3 | 5.0 | 3.0 | 1.06 | α-LiAlO₂ |
| Example 2 | 64 | 8.4 | 5.4 | 3.3 | 0.91 | α-LiAlO₂ |
| Comparative Example 3 | 1 | 8.8 | 5.9 | 3.7 | 0.86 | γ-LiAlO₂ |
| Comparative Example 4 | 59 | 10.6 | 5.7 | 3.4 | 1.26 | Li₂CO₃ / δ-Al₂O₃ |
| Comparative Example 5 | 55 | 8.8 | 5.3 | 3.0 | 1.09 | γ -LiAlO₂/ Li₂CO₃/ γ-Al₂O₃ |
| Comparative Example 6 | 4 | 2.9 | 1.0 | 0.5 | 2.40 | Li₂CO₃ /α-Al₂O₃ |

## Claims

1. Process for producing alpha lithium aluminate, comprising the following steps:
1) preparing an aqueous dispersion comprising a fumed alumina, a lithium oxide precursor compound soluble in water and an alkali metal and/or an ammonium carbonate;
2) Spray drying of the dispersion prepared in step 1) to obtain a dried powder;
3) Calcining the dried powder obtained in step 2) at a temperature of from 450°C to 750°C.

2. Process according to claim 1,
wherein the lithium oxide precursor compound soluble in water is selected from the group consisting of lithium hydroxide, lithium oxide, lithium carbonate, lithium hydrogencarbonate, lithium oxalate, lithium acetate, lithium formate, lithium nitrate, lithium chloride, lithium bromide, lithium sulfate, lithium perchlorate, and the mixtures thereof.

3. Process according to claim 1 or 2,
wherein both the lithium oxide precursor compound soluble in water and the alkali metal carbonate are the same compound lithium carbonate (Li₂CO₃).

4. Process according to claims 1 to 3,
wherein the content of the fumed alumina in the dispersion prepared in step 1) is from 0.5% to 20% by weight.

5. Process according to claims 1 to 4,
wherein step 2) is carried out using an outlet air temperature of the spray drier of 80°C to 150 °C.

6. Process according to Claims 1 to 5,
wherein the duration of step 3) is from 1h to 24h.

7. Lithium aluminate predominantly in alpha crystallographic phase, as determined by XRD analysis with:
a BET surface area of at least 40 m²/g;
numerical mean particle size dso of not more than 20 µm;
span of particle size distribution (d₉₀-d₁₀)/d₅₀ of not more than 2.5.

8. Lithium according to claim 7, having
a BET surface area of 50 m²/g - 100 m²/g;
numerical mean particle size dso of 2 µm - 15 µm;
span of particle size distribution (d₉₀-d₁₀)/d₅₀ of 0.8 - 2.0.

9. Lithium aluminate according to claims 7 to 8,
having a tamped density of 20 g/L - 400 g/L.

10. Lithium aluminate according to claims 7 to 9,
comprising at least 90% of alpha LiAlO₂ phase, as determined by XRD analysis.

11. Use of the lithium aluminate according to claims 7 to 10 in a lithium ion battery, especially as a component of a solid-state electrolyte, as an additive in liquid, or gel electrolyte or as a constituent, such as coating or doping, of an electrode of a lithium ion battery.

12. Electrode for a lithium ion battery comprising the lithium aluminate according to claims 7 to 10.

13. Electrolyte for a lithium ion battery comprising the lithium aluminate according to claims 7 to 10.

14. Lithium ion battery comprising the lithium aluminate according to claims 7 to 10.
